# EUROPÄISCHE PATENTSCHRIFT

(11) **EP 4 330 166 B1**
(45) Veröffentlichungstag und Bekanntmachung des Hinweises auf die Patenterteilung: **08.04.2026**
(21) Anmeldenummer: 22724034.8
(22) Anmeldetag: 20.04.2022
(51) Int. Cl.: B65G 37/00, B65G 65/00

(54) **VERFAHREN UND ANORDNUNG ZUM BELADEN EINES FAHRERLOSEN TRANSPORTFAHRZEUGS FÜR EINZELWAREN**
METHOD AND ARRANGEMENT FOR LOADING A DRIVERLESS TRANSPORT VEHICLE FOR INDIVIDUAL PRODUCTS
PROCÉDÉ ET DISPOSITIF DE CHARGEMENT D'UN VÉHICULE DE TRANSPORT SANS CONDUCTEUR POUR MARCHANDISES INDIVIDUELLES

(30) Priorität: 28.04.2021 DE 102021110926
(43) Veröffentlichungstag der Anmeldung: 06.03.2024
(73) Patentinhaber: Dematic GmbH, 63150 Heusenstamm (DE)
(72) Erfinder: TÖDTER, Joachim, 22391 Hamburg (DE)
(74) Vertreter: Moser Götze & Partner Patentanwälte mbB
(86) Internationale Anmeldenummer: PCT/EP2022/060444
(87) Internationale Veröffentlichungsnummer: WO 2022/228970

(56) Entgegenhaltungen:
- WO-A1-2020/242695
- DE-A1- 102019 122 055
- DE-U1- 202018 101 313

## Beschreibung

Die Erfindung betrifft ein Verfahren nach Anspruch 1 bzw. eine Anordnung nach Anspruch 10 zum Beladen eines fahrerlosen Transportfahrzeugs für Einzelwaren, wobei die Einzelware von einer Abgabestation an das fahrerlose Transportfahrzeug übergeben wird und das fahrerlose Transportfahrzeug sich bei der Übernahme in Bewegung befindet.

Transportfahrzeuge, insbesondere autonome oder fahrerlose Transportfahrzeuge, die als Träger von Waren dienen, sind bekannt. So offenbart die US 2013/054005 A1 sogenannte autonome "bots", die mobile Regale bewegen.

Auch entsprechende Transportfahrzeuge für einzelne Waren oder Ladegüter sind z. B. aus der CN 208018986 U bekannt, bei denen die Ware auf einer Ladefläche auf der Oberseite des Transportfahrzeugs aufliegt.

Die DE 10 2019 122 055 A1 beschreibt ebenfalls ein kleines autonomes Transportfahrzeug für Einzelwaren, das eine auf einer Ladefläche aufgenommene Ware dadurch auf dem Fahrzeug während der Bewegung stabilisiert, dass an einer Seite der Ladefläche eine erhöhte Wandung vorhanden ist. Das Fahrzeug wird beim Transport der Ware immer so gedreht, dass die Beschleunigung beim Anfahren, bei Kurvenfahrten und beim Verzögern die Ware gegen diese erhöhte Wandung drückt. Somit wird ein Herunterfallen verhindert.

Zur Abgabe der Einzelware wird der Bewegungsvektor des Fahrzeugs unmittelbar vor oder bei Ankunft an einer Entladestation verändert und das Fahrzeug von der Fahrzeugsteuerung und/oder von wenigstens einer im Bereich der Entladestation angeordneten Führungseinrichtung vor Ankunft an der Entladestation so ausgerichtet, dass die Bewegungsbahn der sich aufgrund der Änderung des Geschwindigkeitsvektors von der Ladefläche wegbewegenden Ware in einem Aufnahmebereich der Entladestation endet. Mit anderen Worten, die Ware bewegt sich mit dem ursprünglichen Vektor vor der Veränderung weiter und rutscht so durch die Schwerkraft bzw. Trägheit der Bewegung von der Ladefläche des Transportfahrzeugs ab.

Umgekehrt ist es analog bekannt, das entsprechende Fahrzeug mit einer Einzelware zu beladen, wozu die Einzelware klassisch mittels Förderer auf das Fahrzeug geladen wird oder durch das Fahrzeug mittels Abstreifens übernommen wird (vgl. https://www.youtube.com/watch?v=hlAbmQ9kZOs ). Allerdings müssen die Fahrzeuge dazu entweder anhalten oder zumindest stark verlangsamt fahren.

Aus der DE 20 2018 101313 U1 ist eine intralogistische Belade/Entlade-Station für fahrerlose Transportfahrzeuge bekannt, die eingerichtet ist, ein Gut auf das FTF zu laden oder von dem FTF zu entladen, während das FTF steht oder während das FTF synchronisiert seitlich an der Station vorbeifährt oder die Station unterfährt. Die DE 20 2018 101313 U1 offenbart ein Verfahren gemäß dem Oberbegriff des Anspruchs 1 sowie eine Vorrichtung gemäß dem Oberbegriff des Anspruchs 10.

Aus der WO 2020/242695 A1 ist ein Sortierfördersystem mit einem Hauptsortierförderer bekannt, der Pakete direkt in Zielbehälter oder zunächst auf Abgabesortierförderer und dann auf andere Zielbehälter sortiert. Entladungsrutschen mit mehreren Zielorten bedienen zwei oder mehr Zielbehälter. Paketdetektoren erkennen Pakete, die an die Zielbehälter geliefert werden, um zu helfen, Pakete zu identifizieren, die in die falschen Zielbehälter sortiert wurden.

Demgegenüber besteht die Aufgabe der vorliegenden Erfindung darin, eine verbesserte Möglichkeit zum Beladen der Fahrzeuge bereitzustellen, die die obigen Nachteile nicht aufweist, und vor allem schneller ist.

Diese Aufgabe wird durch das in Anspruch 1 wiedergegebene Verfahren gelöst. Vorteilhafte Ausgestaltungen ergeben sich aus den Unteransprüchen und der Beschreibung.

Erfindungsgemäß ist erkannt worden, dass, wenn die Einzelware zur Übergabe von der Abgabestation beschleunigt wird und diese mit einer solchen Geschwindigkeit verlässt und der Abstand des fahrerlosen Transportfahrzeugs zu der Abgabestation derart groß ist, dass die Einzelware eine Flugphase zwischen Verlassen der Abgabestation und Auftreffen auf dem sich mit normaler Transportgeschwindigkeit bewegenden fahrerlosen Transportfahrzeug durchläuft, die Einzelware ohne Verlangsamung übergeben werden kann. Das fahrerlose Transportfahrzeug muss daher weder anhalten noch langsamer fahren.

Die Einzelware wird z. B. mit Förderbändern oder Rollenbahnen zu Übergabepunkten zugeführt. Dabei fließen die Einzelwaren mit heute üblichen Geschwindigkeiten von 4 m/s zu. Bei der Übergabe an das fahrerlose Transportfahrzeug darf die Einzelware nicht verzögert werden, anderenfalls käme es zu Staus. Im Gegenteil, es ist vorteilhaft die Einzelware mit höherer Geschwindigkeit an die fahrerlosen Transportfahrzeuge zu übergeben, so dass die fahrerlosen Transportfahrzeuge größere Abstände zueinander haben als die Einzelwaren auf der zuführenden Fördertechnik.

Mit anderen Worten, die Einzelware wird zur Übergabe an das sich bewegende fahrerlose Transportfahrzeug geworfen, da es auf eine solch hohe Geschwindigkeit beschleunigt wird, dass es beim Verlassen der Abgabestation bzw. dem Ende der Förderstrecke nicht einfach herunterfällt, sondern sich frei weiterbewegt. Die Einzelware fliegt also durch die Luft ohne jegliche Unterstützung oder Kontakt und das fahrerlose Transportfahrzeug fängt sie am Ende der berechneten Flugbahn auf.

Flugphase heißt vorliegend, dass kein Kontakt der Einzelware mit der Abgabestation oder dem Transportfahrzeug in dieser Bewegungsphase besteht. Die Einzelware wird auch nicht anderweitig gestützt, getragen oder liegt auf. Es findet ein passives Fliegen durch die Luft statt.

Vorzugsweise kommt die Erfindung in Warenlagern, Verteilzentren oder Paketverarbeitungszentren zum Einsatz, in denen alle Einzelwaren oder Pakete mit ihren Eigenschaften und Charakteristika, insbesondere Maße, Masse bzw. Gewicht und Schwerpunktlage, bekannt sind. Entsprechend wird die Abgabestation an eine Lieferfördertechnik des entsprechenden Gesamtsystems angeschlossen sein und darüber mit den entsprechenden jeweiligen Einzelwaren versorgt werden, die in der Abgabestation dann auf das entsprechende fahrerlose Transportfahrzeug "umzuladen" sind.

Die Eigenschaften und Charakteristika der Einzelware können daher verwendet werden, um die notwendigen Beschleunigungen bzw. Geschwindigkeiten und daraus wiederum die Flugbahnen oder Trajektorien zu berechnen.

So kann sich das mit normaler Transportgeschwindigkeit bewegende fahrerlose Transportfahrzeug synchronisiert zur Flugbahn der Einzelware bewegen, um die fliegende Einzelware auf seiner Ladefläche gezielt aufzufangen. Mit anderen Worten, aufgrund der bekannten Eigenschaften und der somit vorausberechenbaren Flugbahn kann das Transportfahrzeug gezielt an den Landepunkt der Einzelware verfahren werden, um synchronisiert zur Flugbahn und Fluggeschwindigkeit zur richtigen Zeit die Einzelware aus seiner Ladefläche aufzufangen.

So kann die Abgabestation eine Sensorik am Einlauf aufweisen, um die Identität der jeweiligen Einzelware zu bestimmen.

Erfindungsgemäß hat sich herausgestellt, dass eine besonders geeignete Geschwindigkeit der Einzelware im Bereich zwischen 5 m/s und 15 m/s beim Verlassen der Abgabestation liegt. Dazu kann mittels der bekannten Daten der Einzelware die Fördertechnik zur entsprechenden Beschleunigung angesteuert werden. Als Fördertechnik eignen sich im Prinzip jegliche Art der Fördertechnik, die in der Lage ist, solche Geschwindigkeiten bereitzustellen, insbesondere bei Einzelwaren mit einem Gewicht zwischen 1 kg und 100 kg, insbesondere bis 30 kg, und üblichen Abmessungen. Einzelwaren bzw. Pakete mit üblichen Abmessungen sind kleiner gleich L=675 mm, B=450 mm, H=240 mm, vorzugsweise kleiner gleich als L=480 mm, B=360 mm, H=150 mm.

Die Fördertechnik kann eine entsprechend ausgelegte übliche Rollenbahn oder ein Gurtförderer sein. Zusätzlich oder alternativ sind weitere Ausgestaltungen als alternative Lösungen denkbar. Zusätzlich zur Schwerkraft kann die Andruckkraft durch eine zusätzliche Rollenbahn oberhalb der Einzelware erhöht werden, die mit definierter Kraft auf die Einzelware einwirkt (z. B. per Federvorspannung, hydraulisch beaufschlagt, elektro-motorisch beaufschlagt). Alternativ kann die Einzelware durch seitliche Andruckrollen beschleunigt werden. In dem Fall kann bei den Rollen unterhalb der Einzelware auf eigenen Antrieb verzichtet werden.

Eine weitere Lösung kann in einem Anschieben der Einzelware durch einen Schiebemechanismus liegen. Beim Eintreffen der Einzelware an der Übergaberollenbahn ist der Mechanismus angehoben, so dass der Einzelware unterdurch tauchen kann. Nach Passieren der Einzelware wird der Schieber abgesenkt und anschließend linear in Richtung der Abgabe beschleunigt. Für den Linearantrieb kommen ein elektromotorischer Spindelabtrieb, hydraulische Zylinder oder Pneumatik-Zylinder in Frage. Neben dem Schieben ist es auch denkbar, den Linearantrieb mittels Unterdruck von der Seite oder von vorne mit der Einzelware zu koppeln und diese Kopplung nach der Beschleunigungsphase kurz vor dem Abwurf wieder aufzuheben.

Die Fördertechnik in der Abgabestation wird meist so ausgestaltet sein, dass diese im Wesentlichen horizontal verläuft und am Abgabeende die Fördererstrecke endet. Es ist jedoch auch denkbar, dass die Fördererstrecke am Abgabeende nicht horizontal verläuft, sondern rampenartig nach oben geneigt ist, sodass die Einzelware die Abgabestation in einem von der Horizontalen abweichenden positiven Winkel verlässt. Dies hat den Vorteil, dass die Einzelware mit einem kleineren Nickwinkel auf das fahrerlose Transportfahrzeug auftrifft: Die sich beim Verlassen der Abgabestation einstellende Nickbewegung, d. h. eine durch ihren Schwerpunkt verlaufende Rotation um die Querachse, wird durch den positiven Anstellwinkel vorkompensiert.

Denkbar ist auch, dass der Anstellwinkel abhängig von den Eigenschaften der Einzelware variiert werden kann.

Somit kann einem zu starken Nicken der Einzelware entgegengewirkt werden, so dass die Einzelware möglichst nicht stärker als 20° nickt.

Das Nicken der Einzelware bzw. Pakete resultiert aus der Bewegung, die dem Paket aufgeprägt wird, sobald der Schwerpunkt des Pakets über die "Abwurfkante" hinauskommt, aber der Rest des Pakets dahinter noch aufliegt. Während dieser Zeit wird dem Paket eine Rotationsbewegung mitgegeben; beim Flug rotiert es dann weiter.

Das bedeutet, dass die Nickwinkel beim Auftreffen auf dem fahrerlosen Transportfahrzeug abhängig von der Paketlänge, der Geschwindigkeit und der Flugphase bzw. Flugstrecke sind. Die Erfinder haben erstaunlicherweise durch Vergleich verschiedener Parameterkombinationen festgestellt, dass sich Nickwinkel von bis zu 20° besonders für eine weiche Landung eignen. Bei deutlich höheren Werten wird die Landung auf dem fahrerlosen Transportfahrzeug zu hart.

Eine weitere Ausgestaltung besteht darin, die Fördertechnik nach Erreichen der Endgeschwindigkeit bzw. am Ende des Beschleunigungsvorgangs als Ganzes abzusenken, so dass die Einzelware parallel zur Fördertechnik weiter fliegt ohne eine Nickbewegung. In der vorherigen Variante wird der Einzelware beim Bewegen über die Kante (Ende der Fördertechnik) eine Nickbewegung mitgegeben, wenn die Einzelware "über die Kante kippt". Wenn man die Fördertechnik parallel unter der Einzelware durch das Absenken "wegzieht", fliegt sie auf der Bahn der "Wurfparabel" weiter und kann parallel auf dem fahrerlosen Transportfahrzeug landen, ohne die Nickbewegung.

Daher kann es sinnvoll sein, wenn die Abgabestation ein im Winkel und/oder Höhe veränderliche Abgabeende aufweist.

Bei dem fahrerlosen Transportfahrzeug handelt es sich um branchenübliches fahrerloses Fahrzeug, ausgestattet mit einem Fahrwerk, entweder mit mindestens einem gelenkten Rad oder mit einer Anordnung von Rädern, die ein omnidirektionales Fahrverhalten ermöglicht. Des Weiteren ist es mit einem Antrieb an mindestens einem Rad ausgerüstet, der das Fahrzeug auf die erforderliche Geschwindigkeit von 5 m/s beschleunigen kann. Höhere Fahrgeschwindigkeiten von 10 m/s oder 15 m/s sind ebenfalls möglich und vorteilhaft, um den Durchsatz beim Transport insbesondere auf längeren Transportstrecken zu erhöhen. Des Weiteren besitzt das fahrerlose Fahrzeug eine Steuerung, in Kombination mit Sensoren wie auch einer Kommunikationseinrichtung. Mit den Sensoren ist es in der Lage, seine Position im Lager zu ermitteln. Dabei kann es sich z. B. um Laserscanner handeln, mit denen aus der Messung des Abstands zu ausgezeichneten und bekannten Punkten (wie Reflektoren) mittels Triangulation die Position bestimmt werden kann. Zusätzlich kann es zur Erhöhung der Genauigkeit der Positionierung während der Lastübergabe seine Position relativ zur Übergabestation ermitteln. Auf Basis der bekannten Position kann das fahrerlose Transportfahrzeug mittels der Steuerung eine Trajektorie zum Übergabepunkt für den Übergabezeitpunkt der Einzelware planen, der dem Fahrzeug über die Kommunikationseinheit entweder im bidirektionalen Austausch mit der Übergabestation von dieser oder von einer zentralen Steuerungsinstanz, die sowohl Übergabestation als Fahrzeug steuert, mitgeteilt wird. Im Anfahrprozess navigiert die Steuerung das fahrerlose Transportfahrzeug termingerecht zum Lastübergabepunkt und bestätigt die ordnungsgemäße Anfahrt an die Übergabestation bzw. an die zentrale Steuerung.

Erfindungsgemäß befindet sich das fahrerlose Transportfahrzeug wie oben diskutiert zum notwendigen Zeitpunkt am richtigen Ort am Ende der Flugbahn, um die Einzelwaren mit seiner Ladefläche während der Bewegung aufzufangen. Idealerweise hat es dabei eine der Einzelware entsprechende Geschwindigkeit, sodass die Landung der Einzelware problemlos möglich sein sollte.

Um ein Herunterrutschen oder Fallen der Einzelware bei der Landung sicherzustellen, kann es trotzdem sinnvoll sein, wenn das fahrerlose Transportfahrzeug eine ggf. gepolsterte Auffangwand aufweist. Eine solche Auffangwand ist dann in Fahrtrichtung des Transportfahrzeugs vorne angeordnet und stoppt somit gegebenenfalls ein Verrutschen wirkungsvoll.

Ein Aspekt der vorliegenden Erfindung ist es, dass die Bewegung der Einzelware bzw. deren Flugbahn in der Flugphase und die entsprechende Bewegung des fahrerlosen Transportfahrzeugs mit einander synchronisiert werden, damit das wahllose Transportfahrzeug am Ende der Flugphase bzw. Ende der Flugbahn die Einzelware aufnehmen kann.

Dazu kann die Synchronisierung über eine zentrale Steuerung erfolgen, die neben den entsprechenden Berechnungen auch die Kommunikation zwischen den einzelnen Beteiligten übernimmt. Alternativ ist es auch möglich, dass eine bidirektionale Kommunikation zwischen Abgabestation und fahrerlosen Transportfahrzeug zur zeitlichen und/oder örtlichen Synchronisation der Übergabe der Einzelware stattfindet.

Für die Kommunikation zwischen der Steuerung bzw. Abgabestation und dem fahrerlosen Transportfahrzeug können übliche Kommunikationsmittel eingesetzt werden: z. B. WLAN oder 4G, 5G mit Protokollen basierend auf z. B. MQTT oder OPC-UA oder DDS.

Die Erfindung betrifft nicht nur das oben dargestellte Verfahren, sondern umfasst auch eine entsprechende Anordnung aus dem fahrerlosen Transportfahrzeug, der Abgabestation sowie einer Steuerung und selbst verständlich mindestens einer Einzelware. Dabei weist die Abgabestation eine gesteuerte Fördertechnik mit einem Abgabeende zur Abgabe der Einzelware an eine Ladefläche des fahrerlosen Transportfahrzeugs auf, wobei die Fördertechnik über die Steuerung gesteuert die jeweilige Einzelware auf eine solche Geschwindigkeit beschleunigt, dass die Einzelware beim Verlassen der Abgabestation über das Abgabeende der Fördertechnik eine Flugphase zwischen Verlassen der Abgabestation und Auftreffen auf dem sich mit normaler Transportgeschwindigkeit bewegenden fahrerlosen Transportfahrzeug durchläuft, so dass die Bewegung des fahrerlosen Transportfahrzeugs über die Steuerung synchronisiert zur Flugbahn der Einzelware erfolgt.

Es versteht sich, dass die fliegende Übergabe von der Abgabestation an die schnell fahrenden Transportfahrzeuge in einem geschützten Bereich stattfindet, indem Personal keinen Zutritt hat bzw. nur nach entsprechender Freigabe und Stillstand ein Zutritt ermöglicht wird.

Üblicherweise wird das Abgabeende der Abgabestation im Vergleich zur Oberfläche der Ladefläche der fahrerlosen Transportfahrzeuge in etwa einen vertikalen Abstand zwischen 0,1 m und 0,3 m aufweisen.

Basierend auf den vorgegebenen Abfluggeschwindigkeiten und den vertikalen Abständen liegen die Flugzeiten der Einzelwaren im Bereich zwischen 0,07 und 0,2 s. Entsprechend legt eine Einzelware dabei Flugstrecken von 0,3 bis 1,5 m zurück, je nach Masse und Anfangsgeschwindigkeit etc.

Mittels der Erfindung können die Einzelwaren sogar schneller abgegeben als sie zugeführt werden können. Somit wird ein hoher Durchsatz erreicht.

Zudem muss die Energie für das Beschleunigen der Einzelware nicht durch das fahrerlose Transportfahrzeug aufgebracht werden, sondern wird der Einzelware durch die stationäre Antriebseinheit aufgeprägt, die einfacher mit Energie zu versorgen ist als ein Fahrzeug mit seinem begrenzten Energieinhalt in der Fahrzeugbatterie. Damit erhöht sich die Fahrzeit der Fahrzeuge, die nur die Reibungs- und Antriebsverluste aufbringen müssen. Sofern das Fahrzeug bei der Lastabgabe zusammen mit der Last verzögert, kann ein Teil der mit der Einzelware zugeführten Bewegungsenergie noch in das Fahrzeug rekuperiert werden. Auch wäre es möglich, einen Teil der Energie beim Landen im Fahrzeug zu rekuperieren.

Weitere Details der Erfindung ergeben sich aus der nachfolgenden Beschreibung von Ausführungsbeispielen anhand der Zeichnung, in der
- Fig. 1: eine schematische Seitenansicht verschiedener Stadien des "Abwurfs" einer Einzelware von einer Abgabestation auf ein fahrerloses Transportfahrzeug;
- Fig. 2: eine schematische Seitenansicht auf eine alternative Abgabestation;
- Fig. 3: eine schematische Draufsicht auf eine weitere Abgabestation;
- Fig. 4: eine schematische Draufsicht auf eine weitere Abgabestation;
- Fig. 5: eine schematische Draufsicht auf eine weitere Abgabestation;
- Fig. 6: eine schematische Seitenansicht auf eine weitere Abgabestation und
- Fig. 7: eine schematische Seitenansicht auf eine weitere Abgabestation.
zeigen.

In den Figuren wird die Beschleunigung eines Pakets P auf einer Rollenbahn 2 einer Abgabestation 3 einer Anordnung 1 betrachtet.

Erfindungsgemäß wird das Paket P für die Übergabe auf ein AGV als fahrerloses Transportfahrzeug in der Abgabestation 3 auf eine Geschwindigkeit von 5 m/s beschleunigt und dynamisch auf das AGV 4 übergeben bzw. "geworfen", das sich ebenfalls mit einer solchen Geschwindigkeit bewegt.

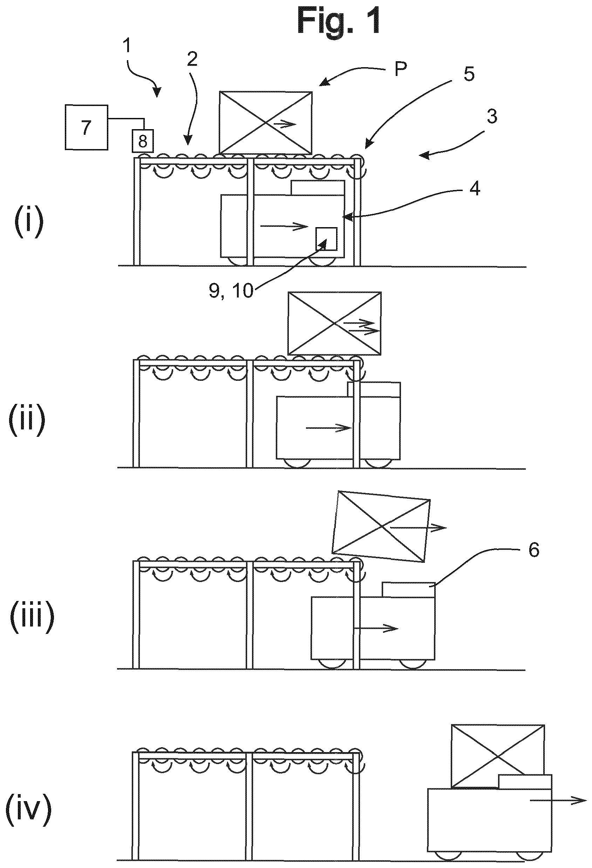

Dargestellt ist in Fig 1 eine angetriebene Rollenbahn 2 mit einem Paket P darauf, stellvertretend für eine beliebige Ware. Das Paket P wird auf der Rollenbahn nach rechts beschleunigt, die Drehzahl der Rollen, symbolisiert durch Pfeile unterhalb der Rollen, steigt mit der Zeit an. Alternativ zur Rollenbahn könnte auch ein Gurtförderer eingesetzt werden, der das Paket links auf dem Gurt aufnimmt und während des Transports nach rechts Gurt und damit auch Paket beschleunigt.

Unterhalb der Rollenbahn fährt ein AGV 4 an, bezüglich der Geschwindigkeit und Position synchronisiert mit dem Paket P auf der Rollenbahn 2, so dass das Paket P nach Verlassen der Rollenbahn am Abgabeende 5 eine Flugphase mit den 5 m/s als Geschwindigkeit durchläuft (Schritt iii) und somit auf das AGV 4 geworfen wird bzw. von diesem aufgefangen wird (Schritt iv). Um ein Abrutschen des Pakets P vom AGV 4 zu verhindern, weist dieses eine in Fahrrichtung vorne platzierte gepolsterte u-förmige (die Ladefläche teilweise umfassende) Auffangwand 6 auf.

Das AGV 4 kann direkt unterhalb der Rollenbahn 2 anfahren, parallel zu Rollenbahn. Es ist aber auch denkbar, dass das AGV 4 auf einer Kurvenbahn anfährt und erst zum Zeitpunkt der Lastübergabe einen Geschwindigkeitsvektor parallel zur Rollenbahn erreicht. Das kann den Vorteil haben, dass das AGV 4 ein ggf. zur Stabilisierung der Ladung während der Fahrt benötigtes Widerlager neben der Rollenbahn führen kann und die Rollen in sehr geringem Abstand oberhalb der Ladefläche des AGV positioniert werden können, so dass die Fallhöhe bzw. der Abstand zwischen Abgabeende und Ladefläche des AGV sehr gering ausfällt. Das vermeidet Belastungen des Pakets durch Beschleunigungen bzw. den Stoß beim Auftreffen auf dem AGV. Die Anfahrtstrajektorien sind noch nicht bildlich dargestellt.

Zusätzlich sind Sensoren 8 und Steuerungen 7 an der Rollenbahn 2 und Sensoren 9 und Steuerungen 10 in dem AGV 4 vorgesehen, die die Position und Geschwindigkeit des Pakets P ermitteln wie auch die Position und Geschwindigkeit des AGVs. Letzteres kann sowohl absolut geschehen, wenn die absolute Position deren Rollenbahn als bekannt vorausgesetzt wird als auch relativ zur Rollenbahn, insbesondere am Ende 5 der Rollenbahn.

Des Weiteren ist eine Kommunikation zwischen Fahrzeug und Abgabestation mittels der Steuerungen 7, 10 vorgesehen, um die Übergabe zeitlich und örtlich zu koordinieren. Alternativ kann die Koordination durch eine übergeordnete Steuerung erfolgen, die beim Eintreffen eines Pakets an der Übergaberollenbahn einem AGV den Auftrag zur Abholung zuweist und die Anfahrt des AGV und die Paketbewegung auf der Rollenbahn miteinander synchronisiert.

In den Figuren 1 liegt das Paket unter Schwerkraft auf dem Rollenförderer auf und die Beschleunigungsenergie wird durch die Reibkraft übertragen, die auf dem Eigengewicht beruht.

In weiteren Ausgestaltungen sind alternative Lösungen dargestellt, um die Andruckkraft bzw. Übertragung der Beschleunigungskraft auf das Paket P zu verbessern.

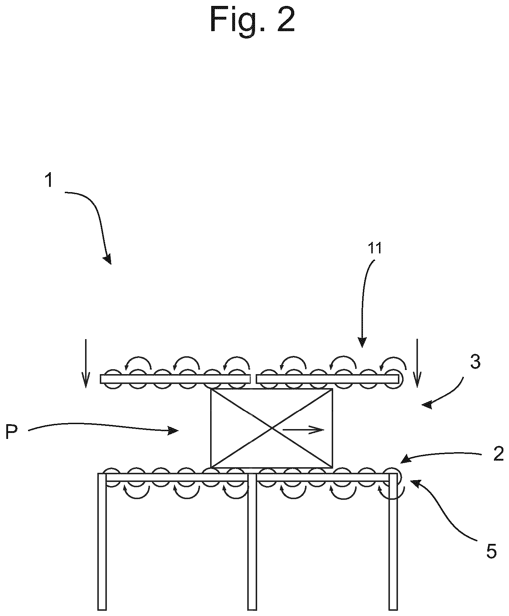

Wie in Figur 2 dargestellt, kann zusätzlich zur Schwerkraft die Andruckkraft durch eine zusätzliche Rollenbahn 11 oberhalb des Pakets P erhöht werden, die mit definierter Kraft auf das Paket P von oben einwirkt bzw. das Paket P zwischen sich und der Rollenbahn 2 einklemmt (z. B. per Federvorspannung, hydraulisch beaufschlagt, elektro-motorisch beaufschlagt).

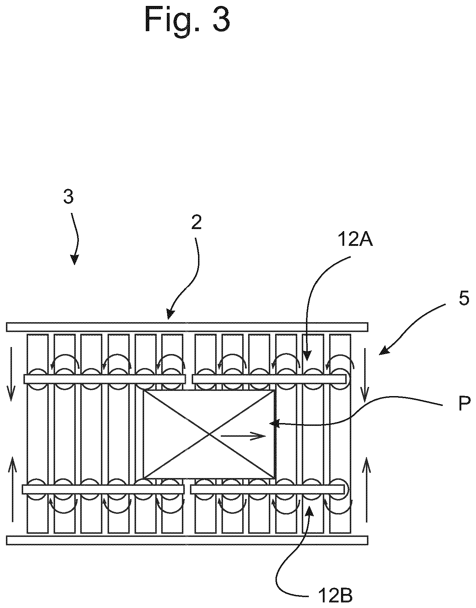

Alternativ kann das Paket P durch seitliche Andruckrollen 12A, B beschleunigt werden, wie in Figur 3 dargestellt, die das Paket P zwischen sich einklemmen. In dem Fall kann die Rollenbahn 2 antriebslos ausgestaltet werden.

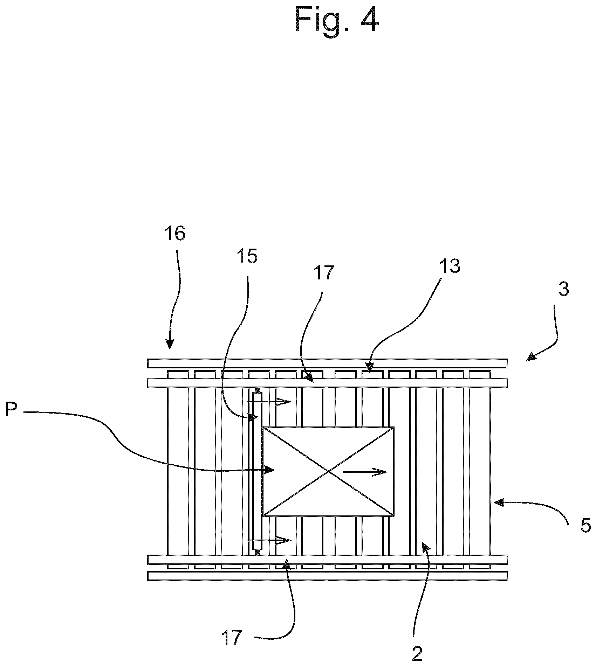

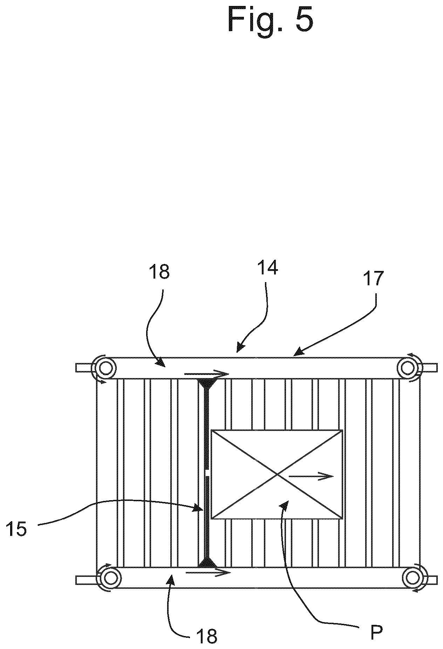

Eine weitere Lösung kann in einem Anschieben des Pakets P durch einen Schiebemechanismus 13, 14 liegen, wie in Figuren 4 und 5 dargestellt. Der Schiebemechanismus 13 nach Figur 4 umfasst eine höhenbewegliche Querstange 15, die über parallele beidseitig der Rollenbahn 2 angeordnete Antriebe 17 linear in Richtung der Abgabe beschleunigbar ist. Für den Linearantrieb kommen ein elektromotorischer Spindelabtrieb, hydraulische Zylinder oder Pneumatik-Zylinder in Frage (nicht gezeigt).

Beim Eintreffen des Pakets P an der Übergaberollenbahn 16 ist die Querstange 15 angehoben, so dass das Paket unterdurch tauchen kann. Nach Passieren des Pakets P wird die Querstange 15 abgesenkt und anschließend linear in Richtung der Abgabe beschleunigt.

Gemäß Figur 5 kann der Antrieb 17 als umlaufende, angetriebene Riemen 18 mit einem Mitnehmer 15 als Querstange zur Beschleunigung des Pakets P ausgestaltet sein. Der Riemenantrieb 18 wird so gesteuert, dass das Paket gezielt beschleunigt wird.

Neben dem Schieben ist es auch denkbar, den Linearantrieb mittels Unterdruck von der Seite oder von vorne mit dem Paket zu koppeln und diese Kopplung nach der Beschleunigungsphase kurz vor dem Abwurf wieder aufzuheben.

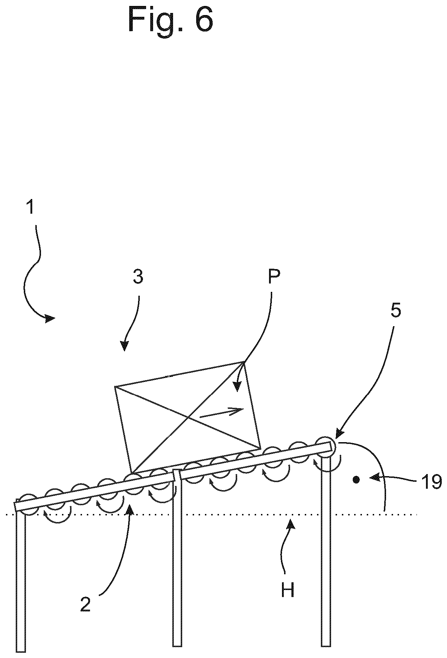

Gemäß Figur 6 kann das Abgabenende 5 der Abgabestation 3 angestellt sein, also mit einem Winkel 19 im Vergleich zur Horizontalen H ausgeführt werden, um die Flugbahn und insbesondere ein Nicken des Pakets P zu beeinflussen.

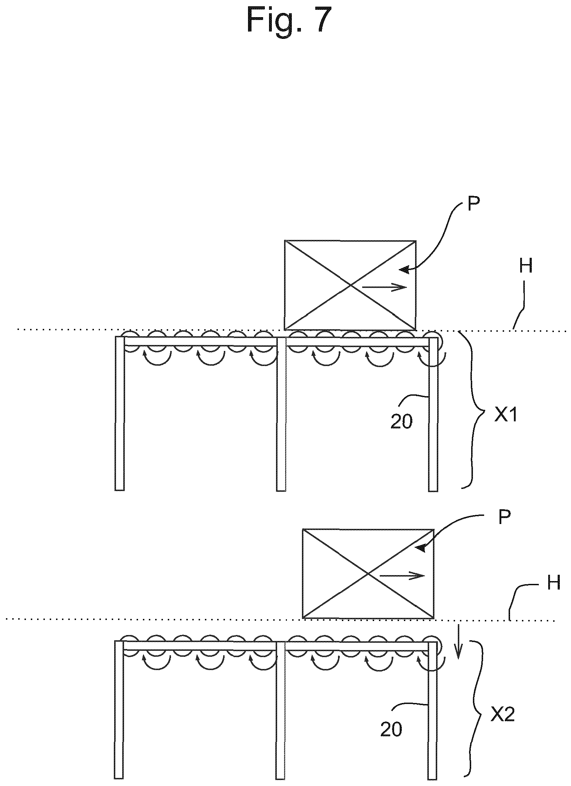

In der in Figur 7 gezeigten Variante weist die Abgabestation 3 am Abgabeende 5 höhenveränderliche Stützen 20 auf, so dass die Fördertechnik nach Erreichen der Endgeschwindigkeit bzw. am Ende des Beschleunigungsvorgangs als Ganzes von einer Höhe X1 auf eine kleinere Höhe X2 aus der Horizontalen H abgesenkt werden kann, so dass die Einzelware parallel zur Fördertechnik weiter fliegt ohne eine Nickbewegung.

## Patentansprüche

1. Verfahren zum Beladen eines fahrerlosen Transportfahrzeugs (4) für Einzelwaren mit einer Einzelware (P), wobei die Einzelware (P) von einer Abgabestation (3) an das fahrerlose Transportfahrzeug (4) übergeben wird und das fahrerlose Transportfahrzeug (4) sich bei der Übernahme in Bewegung befindet, **dadurch gekennzeichnet, dass** die Einzelware (P) zur Übergabe von der Abgabestation (3) beschleunigt wird und diese mit einer solchen Geschwindigkeit verlässt und der Abstand des fahrerlosen Transportfahrzeugs (4) zu der Abgabestation (3) derart groß ist, dass die Einzelware (P) eine Flugphase zwischen Verlassen der Abgabestation (3) und Auftreffen auf dem sich mit normaler Transportgeschwindigkeit bewegenden fahrerlosen Transportfahrzeug (4) durchläuft.

2. Verfahren nach Anspruch 1, **dadurch gekennzeichnet, dass** sich das mit normaler Transportgeschwindigkeit bewegende fahrerlose Transportfahrzeug (4) synchronisiert zur Flugbahn der Einzelware (P) bewegt, um die fliegende Einzelware auf seiner Ladefläche aufzufangen.

3. Verfahren nach Anspruch 2, **dadurch gekennzeichnet, dass** die Geschwindigkeit der Einzelware (P) und die Synchronisation der Bewegung des fahrerlosen Transportfahrzeugs (4) aufgrund der Eigenschaften der Einzelware (P) gesteuert werden.

4. Verfahren nach einem der vorhergehenden Ansprüche, **dadurch gekennzeichnet, dass** die Einzelware (P) auf eine Geschwindigkeit von mindesten 5m/s beschleunigt wird.

5. Verfahren nach einem der vorhergehenden Ansprüche, **dadurch gekennzeichnet, dass** die Einzelware (P) die Abgabestation (3) in einem von der Horizontalen abweichenden positiven Winkel (19) verlässt.

6. Verfahren nach einem der vorhergehenden Ansprüche, **dadurch gekennzeichnet, dass** die Abgabestation (3) eine Sensorik (8) am Einlauf aufweist, um die Identität der jeweiligen Einzelware (P) zu bestimmen.

7. Verfahren nach einem der vorhergehenden Ansprüche, **dadurch gekennzeichnet, dass** die Abgabestation ein im Winkel (19) und/oder Höhe (X1, X2) veränderliches Abgabeende (5) aufweist.

8. Verfahren nach einem der vorhergehenden Ansprüche, **dadurch gekennzeichnet, dass** das fahrerlose Transportfahrzeug (4) eine ggf. gepolsterte Auffangwand (6) aufweist.

9. Verfahren nach einem der vorhergehenden Ansprüche, **dadurch gekennzeichnet, dass** eine bidirektionale Kommunikation zwischen Abgabestation (3) und fahrerlosem Transportfahrzeug (4) zur zeitlichen und/oder örtlichen Synchronisation der Übergabe der Einzelware (P) stattfindet.

10. Anordnung (1) zum Beladen eines fahrerlosen Transportfahrzeugs (4) für Einzelwaren mit einer Einzelware (P), insbesondere zur Durchführung eines Verfahrens nach einem der vorhergehenden Ansprüche, umfassend ein fahrerloses Transportfahrzeug (4) für Einzelwaren, eine Abgabestation (3) für Einzelwaren und mindestens eine Einzelware (P) sowie eine Steuerung (7, 10), wobei die Abgabestation (3) eine gesteuerte Fördertechnik (2, 13, 14) mit einem Abgabeende (5) zur Abgabe der Einzelware (P) an eine Ladefläche des fahrerlosen Transportfahrzeugs (4) aufweist, **dadurch gekennzeichnet, dass** die Fördertechnik (2, 13, 14) über die Steuerung (7) gesteuert die jeweilige Einzelware (P) auf eine solche Geschwindigkeit beschleunigt, dass die Einzelware (P) beim Verlassen der Abgabestation (3) über das Abgabeende (5) der Fördertechnik eine Flugphase zwischen Verlassen der Abgabestation (3) und Auftreffen auf dem sich mit normaler Transportgeschwindigkeit bewegenden fahrerlosen Transportfahrzeug (4) durchläuft und dass die Bewegung des fahrerlosen Transportfahrzeugs (4) über die Steuerung (7, 10) synchronisiert zur Flugbahn der Einzelware (P) erfolgt.

## Claims

1. Method for loading a driverless transport vehicle (4) for individual products with an individual product (P), wherein the individual product (P) is transferred from a delivery station (3) to the driverless transport vehicle (4), and the driverless transport vehicle (4) is moving during the transfer, **characterised in that** the individual product (P) is accelerated for the transfer from the delivery station (3) and leaves the latter at such a speed and the distance between the driverless transport vehicle (4) and the delivery station (3) is of such a size that the individual product (P) passes through a flight phase between leaving the delivery station (3) and landing on the driverless transport vehicle (4) moving at a normal transport speed.

2. Method as claimed in claim 1, **characterised in that** the driverless transport vehicle (4) moving at a normal transport speed moves in a manner synchronised to the flight path of the individual product (P) in order to catch the flying individual product on its loading surface.

3. Method as claimed in claim 2, **characterised in that** the speed of the individual product (P) and the synchronisation of the movement of the driverless transport vehicle (4) are controlled based on the properties of the individual product (P).

4. Method as claimed in any one of the preceding claims, **characterised in that** the individual product (P) is accelerated to a speed of at least 5 m/s.

5. Method as claimed in any one of the preceding claims, **characterised in that** the individual product (P) leaves the delivery station (3) at a positive angle (19) deviating from the horizontal.

6. Method as claimed in any one of the preceding claims, **characterised in that** the delivery station (3) has a sensor system (8) at the in-feed in order to determine the identity of the respective individual product (P).

7. Method as claimed in any one of the preceding claims, **characterised in that** the delivery station has a delivery end (5) which is variable in terms of angle (19) and/or height (X1, X2).

8. Method as claimed in any one of the preceding claims, **characterised in that** the driverless transport vehicle (4) has a possibly cushioned catch wall (6).

9. Method as claimed in any one of the preceding claims, **characterised in that** bidirectional communication takes place between the delivery station (3) and driverless transport vehicle (4) for the time- and/or position-synchronisation of the transfer of the individual product (P).

10. Arrangement (1) for loading a driverless transport vehicle (4) for individual products with an individual product (P), in particular for performing a method as claimed in any one of the preceding claims, comprising a driverless transport vehicle (4) for individual products, a delivery station (3) for individual products and at least one individual product (P), as well as a controller (7, 10), wherein the delivery station (3) comprises a controlled conveyor system (2, 13, 14) having a delivery end (5) for delivering the individual product (P) to a loading surface of the driverless transport vehicle (4),
**characterized in that** the conveyor system (2, 13, 14), controlled via the controller (7), accelerates the respective individual product (P) to such a speed that the individual product (P), when leaving the delivery station (3) via the delivery end (5) of the conveyor system, passes through a flight phase between leaving the delivery station (3) and landing on the driverless transport vehicle (4) moving at a normal transport speed, and that the movement of the driverless transport vehicle (4) is synchronised to the flight path of the individual product (P) via the controller (7, 10).

## Revendications

1. Procédé pour charger une marchandise (P) individuelle dans un véhicule (4) sans conducteur de transport de marchandises individuelles, dans lequel on fait passer la marchandise (P) individuelle d'un poste (3) de distribution au véhicule (4) de transport sans conducteur et le véhicule (4) de transport sans conducteur se trouve en mouvement lors de la prise en charge, **caractérisé en ce que** la marchandise (P) individuelle est accélérée pour le transfert du poste (3) de distribution et quitte celui-ci à une vitesse telle et la distance entre le véhicule (4) de transport sans conducteur et le poste (3) de distribution est si grande que la marchandise (P) individuelle passe par une phase de vol entre quitter le poste (3) de distribution et arriver sur le véhicule (4) de transport sans conducteur mis en mouvement à une vitesse de transport normale.

2. Procédé suivant la revendication 1, **caractérisé en ce que** le véhicule (4) de transport sans conducteur se déplaçant à une vitesse de transport normale se déplace de manière synchronisée avec la trajectoire de vol de la marchandise (P) individuelle afin de mettre la marchandise individuelle volante sur sa surface de chargement.

3. Procédé suivant la revendication 2, **caractérisé en ce que** l'on commande la vitesse de la marchandise (P) individuelle et la synchronisation du mouvement du véhicule (4) de transport sans conducteur sur la base des propriétés de la marchandise (P) individuelle.

4. Procédé suivant l'une des revendications précédentes, **caractérisé en ce que** l'on accélère la marchandise (P) individuelle jusqu'à une vitesse d'au moins 5m/s.

5. Procédé suivant l'une des revendications précédentes, **caractérisé en ce que** la marchandise (P) individuelle quitte le poste (3) de distribution suivant un angle (19) positif s'écartant de l'horizontal.

6. Procédé suivant l'une des revendications précédentes, **caractérisé en ce que** le poste (3) de distribution a, à l'entrée, un système (8) de capteur, afin de déterminer l'identité de la marchandise (P) individuelle respective.

7. Procédé suivant l'une des revendications précédentes, **caractérisé en ce que** le poste de distribution a une extrémité (5) de distribution, dont l'angle (19) et/ou la hauteur (X1, X2) est variable.

8. Procédé suivant l'une des revendications précédentes, **caractérisé en ce que** le véhicule (4) de transport sans conducteur a une paroi (6) de réception, le cas échéant, rembourrée.

9. Procédé suivant l'une des revendications précédentes, **caractérisé en ce qu'**une communication bidirectionnelle a lieu entre le poste (3) de distribution et le véhicule (4) de transport sans conducteur pour la synchronisation temporelle et/ou spatiale du transfert de la marchandise (P) individuelle.

10. Agencement (1) de chargement d'une marchandise (P) individuelle dans un véhicule (4) sans conducteur de transport de marchandises individuelles, en particulier, pour effectuer un procédé suivant l'une des revendications précédentes, comprenant un véhicule (4) de transport sans conducteur de marchandises individuelles, un poste (3) de distribution de marchandises individuelles et au moins une marchandise (P) individuelle, ainsi qu'une commande (7, 10), dans lequel le poste (3) de distribution a une technique (2, 13, 14) commandée de transport avec une extrémité (5) de distribution pour la distribution de la marchandise (P) individuelle sur une surface de chargement du véhicule (4) de transport sans conducteur, **caractérisé en ce que**
la technique (2, 13, 14) de transport, commandée par la commande (7), accélère la marchandise (P) individuelle respective à une vitesse telle que la marchandise (P) individuelle passe, lorsqu'elle quitte le poste (3) de distribution en passant par l'extrémité (5) de distribution de la technique de transport, par une phase volante entre quitter le poste (3) de distribution et arriver sur le véhicule (4) de transport sans conducteur en déplacement à une vitesse de transport normale et **en ce que** le déplacement du véhicule (4) de transport sans conducteur s'effectue par la commande (7, 10) de manière synchronisée avec la trajectoire volante de la marchandise (P) individuelle.
